**Europäisches Patentamt**

**European Patent Office**

**Office européen des brevets**

(19)

(11) Veröffentlichungsnummer: **0 009 251**
**A1**

(12)

# EUROPÄISCHE PATENTANMELDUNG

(21) Anmeldenummer: **79103551.2**

(51) Int. Cl.³: **B 01 D 3/12**

(22) Anmeldetag: **20.09.79**

(30) Priorität: **21.09.78 CH 9860/78**

(43) Veröffentlichungstag der Anmeldung: **02.04.80**
Patentblatt 80/7

(84) Benannte Vertragsstaaten: **CH DE FR NL**

(71) Anmelder: **L. Givaudan & Cie Société Anonyme,
Patentdienst Postfach, CH-4002 Basel (CH)**

(72) Erfinder: **Szabo, Attila, 20 chemin de la Caroline,
CH-1213 Petit-Lancy (CH)**

(74) Vertreter: **Lederer, Franz, Dr. et al, Patentanwälte Dr.
Lederer Franz Meyer-Roxlau Reiner F. Lucile-Grahn-
Strasse 22, D-8000 München 80 (DE)**

(54) **Fraktionierverfahren und -vorrichtung.**

(57) Verfahren und Vorrichtung zum Fraktionieren hitzeempfindlicher Substanzgemische mittels diskontinuierlicher
Kurzwegdestillation im Dünnschichtverdampfer mit innenliegendem Kondensator (2) wobei das gleiche Produkt
mehrfach erneut auf denselben Kurzwegverdampfer aufgegeben wird und die Vorrichtung zu diesem Zweck einen
Produktumwälzkreislauf enthält.

2 0. Sep. 1979

L. Givaudan & Cie Société Anonyme, Vernier-Genève (Schweiz)

<u>Ref.6550/17</u>

<u>Fraktionierverfahren und -vorrichtung</u>

Die Erfindung betrifft ein Verfahren zum Fraktionieren hitzeempfindlicher Substanzgemische mittels Kurzweg-Destillation im Dünnschichtverdampfer mit innenliegendem Kondensator.

Der Begriff "Kurzwegdestillation" bezeichnet eine Art der Vakuumdestillation, bei der die freie Weglänge der Produktmoleküle kleiner ist als der Abstand zwischen Verdampfer und Kondensator, so dass Zusammenstösse zwischen Molekülen möglich sind.

Für die fraktionierte Destillation hitzeempfindlicher Substanzen, die sich bei normalen Siedetemperaturen zersetzen würden, wendet man die Hochvakuum- oder Molekulardestillation an. Diese Form der Destillation genügt den heutigen Anforderungen bezüglich Ausbeute und Durchsatz häufig nicht mehr.

Bu/30.8.79

- 2 -

Auf der anderen Seite ist eine der perfektioniertesten Destillationsanlagen, die sogenannte Kurzwegdestillationsanlage mit Dünnschichtverdampfer mit innenliegendem Kondensator nur für den kontinuierlichen Betrieb verfügbar, d.h. sie ermöglicht die Entnahme eines gleichbleibenden Produkts. Im Gegensatz dazu erfordert die fraktionierte Destillation die Aufteilung des Substanzgemisches in beispielsweise 10-20 verschiedene Fraktionen. Dies liesse sich durch Hintereinanderschalten einer entsprechenden Anzahl kontinuierlicher Anlagen ermöglichen. Die Investitions- und Betriebskosten für eine solche Anlage wären allerdings übermässig hoch.

Der Erfindung liegt daher die Aufgabe zugrunde, eine Möglichkeit der fraktionierten Destillation mit einer Kurzwegverdampfungsanlage aufzuzeigen, die ökonomisch tragbar ist.

Erfindungsgemäss wird dies dadurch erreicht, dass die Kurzwegdestillation diskontinuierlich durchgeführt und das gleiche Produkt mehrfach erneut auf denselben Kurzwegverdampfer aufgegeben wird. Durch Veränderung der Betriebsdaten können nacheinander verschiedene Fraktionen gewonnen werden.

Zur Durchführung dieses Verfahrens eignet sich eine Kurzwegverdampfungsanlage mit einer Destillierblase, einem aufgesetzten Dünnschichtverdampfer mit innenliegendem Kondensator, und einem Produktumwälzkreislauf mit einer Umwälzpumpe zwischen Destillierblase und Verdampfer.

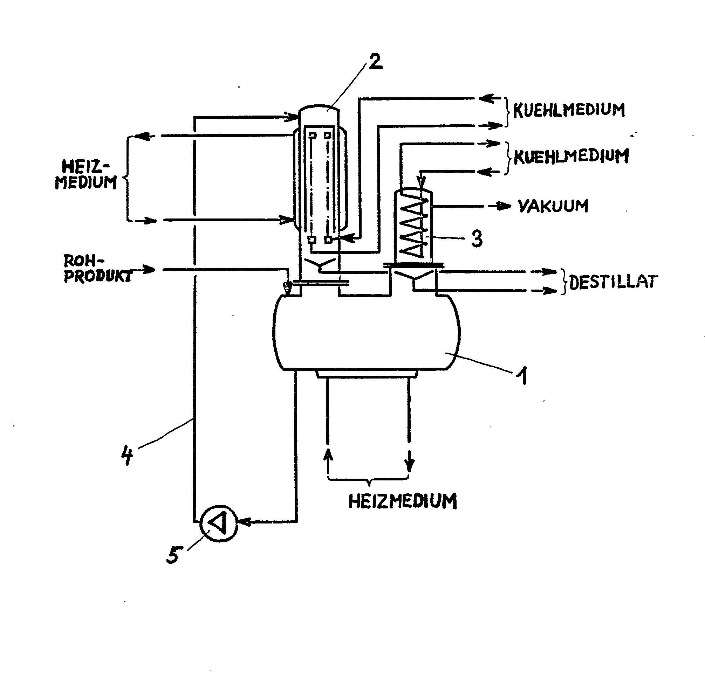

Im folgenden ist anhand der beiliegenden Zeichnung ein Ausführungsbeispiel der Erfindung beschrieben.

Wie die Zeichnung zeigt, besteht die Kurzweg-Destillationsanlage im wesentlichen aus einer liegenden Destillierblase 1, auf die ein Dünnschichtverdampfer 2 mit innenliegendem Kondensator aufgebaut ist. Der übliche Rotor des Dünnschichtverdampfers ist für den Einsatz bei der Kurzwegdestillation mit einem Separator (nicht gezeigt) ausgerüstet.

Die Verbindung zu den Vakuumpumpen (nicht gezeigt) erfolgt über eine ebenfalls auf der Destillierblase aufgesetzte Kältefalle 3. Diese Kältefalle dient dazu, die aus der Destillierblase abgesaugten Gase zu kühlen, um den Anteil an Restdampf so niedrig wie möglich zu halten.

Von der Unterseite der Destillierblase führt eine Leitung 4 zu einer Umwälzpumpe 5 und weiter zum oberen Teil des Dünnschichtverdampfers 2.

Destillierblase und Verdampfer sind mit üblichen Heizelementen versehen, die im Falle der Destillierblase mit Heizdampf und im Falle des Verdampfers mit Heisswasser beheizt werden. Der Kondensator des Dünnschichtverdampfers 2 wird mit Kühlwasser gekühlt, die Kältefalle mit Kühlsole. Unterhalb des Kondensators des Verdampfers 2 und der Kältefalle 3 befinden sich Auffangvorrichtungen für das Destillat.

Im Betrieb arbeitet die Anlage wie folgt:

Das Ausgangsprodukt wird durch das Vakuum in die Destillierblase eingesaugt. Während des Betriebs wird das Produkt durch die Pumpe 5 über die Leitung 4 durch den Kurzwegverdampfer 2 umgepumpt. Im Verdampfer wird ein Teil des Produktes abdestilliert und zwar entsprechend der gewählten Heizmitteltemperatur und dem Betriebsdruck. Durch Veränderung dieser Betriebsdaten können nacheinander verschiedene Fraktionen gewonnen werden. Die Produktdämpfe werden an dem Kondensator des Verdampfers 2 niedergeschlagen. Das Destillat wird unterhalb des Kondensators aufgefangen und nach aussen abgepumpt. Die aus der Destillierblase abgesaugten Gase werden in der Kältefalle gekühlt. Das von der Kältefalle ablaufende Destillat wird ebenfalls nach aussen abgepumpt.

Selbstverständlich sind anstelle von Kühlsole bzw. -wasser und Heizwasser auch andere übliche Kühl- und Heizmedien verwendbar.

- 4 -

Eine typische Anlage nach der Erfindung ist wie folgt dimensioniert: Die Destillierblase hat mit einem Durchmesser von 1000 mm und einer Gesamtlänge von ca. 1900 mm einen Inhalt von ca. 630 Liter.

Der Verdampfer besitzt einen Innendurchmesser von 600 mm und eine Wärmeübertragungsfläche von 3 $m^2$. Der Kondensator im Inneren des Verdampfers besteht aus einem stehenden Rohrbündel, das mit dem unteren Teil des Verdampfers fest verbunden ist und von unten in den Verdampfer eingebaut wird. Die Wärmeübertragungsfläche des Kondensators beträgt 4,5 $m^2$.

Die Kältefalle hat ebenfalls einen Durchmesser von 600 mm und eine Länge von ca. 1050 mm. Die Wärmeübertragungsfläche des als Spiralschlange ausgeführten Kondensators beträgt ca. 6,3 $m^2$.

Diese Anlage ist für eine Produktmenge von 500 kg ausgelegt. Die Betriebszeit beträgt ca. 5 Stunden, wobei während dieser Zeit ca. 10 Fraktionen gewonnen werden.

In einer Versuchsanlage mit einer Einsatzmenge von 10,0 kg wurden während einer Betriebszeit von 195 Minuten folgende 11 Fraktionen gewonnen:

| Fraktion No. | Menge absolut [g] | % Einsatz | Zeit [min] | Druck im Verdampfer [Torr] | Temperatur Heizmedium [°C] |
|---|---|---|---|---|---|
| 1 | 116 | 1,2 | 50 | 70 → 0,43 | 80 → 110 |
| 2 | 2490 | 25,0 | 30 | 0,43 → 0,4 | 110 |
| 3 | 1788 | 17,9 | 17 | 0,39 | 110 |
| 4 | 862 | 8,6 | 13 | 0,39 | 100 |
| 5 | 882 | 8,8 | 15 | 0,39 | 100 |
| 6 | 729 | 7,3 | 20 | 0,39 | 100 |
| 7 | 406 | 4,1 | 20 | 0,39 | 100 |
| 8 | 520 | 5,2 | 20 | 0,39 | 115 |
| 9 | 207 | 2,1 | 20 | 0,39 | 120 |
| 10 | 202 | 2,0 | 10 | 0,39 | 125 |
| 11 | 216 | 2,2 | 10 | 0,39 | 135 |
| Σ | 8418 | | 195 | | |

Rückstand    1350

Destillat

Kühlfalle    60

9828  ≈  98,5 Gew. % bezgl. Einsatzmenge

- 6 -

<u>Patentansprüche</u>

1. Verfahren zum Fraktionieren hitzeempfindlicher Substanzgemische mittels Kurzwegdestillation im Dünnschichtverdampfer mit innenliegendem Kondensator, dadurch gekennzeichnet, dass die Kurzwegdestillation diskontinuierlich durchgeführt und das gleiche Produkt mehrfach erneut auf denselben Kurzwegverdampfer aufgegeben wird.

2. Vorrichtung zur Durchführung des Verfahrens nach Anspruch 1, gekennzeichnet durch eine Kurzwegverdampfungsanlage mit einer Destillierblase, einem aufgesetzten Dünnschichtverdampfer mit innenliegendem Kondensator und einem Produktumwälzkreislauf mit einer Umwälzpumpe zwischen Destillierblase und Verdampfer.

* * *